Europäisches Patentamt

European Patent Office

Office européen des brevets

(19)

(11) Veröffentlichungsnummer: **0 500 978 A1**

## EUROPÄISCHE PATENTANMELDUNG

(12)

(21) Anmeldenummer: **91102869.4**

(22) Anmeldetag: **27.02.91**

(51) Int. Cl.5: **F24D 3/16**

(43) Veröffentlichungstag der Anmeldung:
**02.09.92 Patentblatt 92/36**

(84) Benannte Vertragsstaaten:
**AT BE CH DE DK ES FR GB GR IT LI NL**

(71) Anmelder: **Zehnder-Beutler GmbH**
**Almweg 34**
**W-7630 Lahr 12(DE)**

(72) Erfinder: **Sexauer, Gerd, Dipl.-Ing.**
**Martin-Luther-Strasse 1**
**W-7832 Kenzingen(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) **Deckenstrahlplatte.**

(57) Die Erfindung betrifft eine Deckenstrahlplatte zur Beheizung von Räumen mittels Strahlungswärme, bestehend aus einer im wesentlichen ebenen Grundplatte (1) und aus einer Mehrzahl von Kanälen (2), die parallel zu den Längsrändern (3) der Grundplatte (1) verlaufen und an Zu- und Abführleitungen für das wärmeabgebende Fluid anschließbar sind. Um die Wärmeleistung derartiger Deckenstrahlplatten zu erhöhen und/oder deren Gewicht zu reduzieren, sind die Kanäle (2) mit einem von der Kreisform abweichenden Querschnitt ausgebildet. Die Kanäle (2) können durch Rohre (5) oder durch in der Grundplatte (1) ausgebildete Ausformungen (7) und diese Ausformungen (7) zu einem rohrartigen Hohlraum verschließende Abdeckungen (8) gebildet sein.

Fig. 11

EP 0 500 978 A1

Die Erfindung betrifft eine Deckenstrahlplatte zur Beheizung von Räumen mittels Strahlungswärme, bestehend aus einer im wesentlichen ebenen Grundplatte und aus einer Mehrzahl von Kanälen, die parallel zu den Längsrändern der Grundplatte verlaufen und an Zu- und Abführleitungen für das wärmeabgebende Fluid anschließbar sind.

Derartige Deckenstrahlplatten sind in verschiedenen Ausführungen bekannt. Sie werden insbesondere zur Beheizung von Großräumen, wie beispielsweise Fertigungsbetrieben, Lagerhallen, Fahrzeughallen, Werkstätten, Verkaufsmärkten und Sportstätten verwendet.

Bei den bekannten Deckenstrahlplatten der voranstehend beschriebenen Art werden die Kanäle durch im Querschnitt kreisförmige Rohre gebildet, die in Ausformungen der Grundplatte eingelegt sind und deren Oberfläche möglichst dicht vom Material der Grundplatte umschlossen wird, um einen guten Wärmeübergang zwischen dem Material des Rohres und dem Material der Grundplatte zu erzielen.

Ausgehend von diesem bekannten Stand der Technik liegt der Erfindung die **Aufgabe** zugrunde, zwecks Verbesserung des Wärmeüberganges zwischen dem in den Kanälen strömenden Fluid und der Grundplatte die der Wärmeleitung dienende Kontaktfläche zwischen der Oberfläche der Kanäle und der entsprechenden Gegenfläche der Grundplatte zu vergrößern.

Die **Lösung** dieser Aufgabenstellung durch die Erfindung ist dadurch gekennzeichnet, daß die Kanäle mit einem von der Kreisform abweichenden Querschnitt ausgebildet sind.

Durch den von der Kreisform abweichenden Querschnitt der Kanäle ergibt sich bei der erfindungsgemäßen Deckenstrahlplatte eine bezogen auf den Strömungsquerschnitt des wärmeabgebenden Fluids größere Kontaktfläche zwischen den Kanälen und der Grundplatte, so daß der durch Wärmeleitung stattfindende Wärmeübergang zwischen dem Fluid und der Grundplatte verbessert wird. Als Folge hiervon kann die Anzahl der Kanäle und/oder die Menge des umlaufenden Fluids verringert werden, womit gleichzeitig bezogen auf eine vorgegebene Wärmeleistung eine Gewichtsersparnis der erfindungsgemäßen Deckenstrahlplatten verbunden ist. Da die Deckenstrahlplatten an einer Tragkonstruktion aufgehängt werden, kann gleichzeitig die Tragfähigkeit der Tragkonstruktion herabgesetzt werden, so daß sich insgesamt bei vorgegebener Heizleistung eine Kostenersparnis durch die Verwendung der erfindungsgemäßen Deckenstrahlplatten ergibt.

Die mit einem von der Kreisform abweichenden Querschnitt ausgebildeten Kanäle können in der einfachsten Form durch an der Ober- und/oder Unterseite einer ebenen Grundplatte angeordnete Rohre gebildet sein. Bei einer bevorzugten Ausführungsform der Erfindung werden die Kanäle durch in Ausformungen der Grundplatte angeordnete Rohre mit einem halbkreisförmigen, ovalen, elliptischen, rechteckigen, trapezförmigen, dreieckigen oder ähnlichem Querschnitt gebildet. Das Verhältnis von Strömungsquerschnitt zur Oberfläche der verwendeten Rohre kann hierbei in beiden Fällen auf den jeweiligen Anwendungsfall abgestimmt werden.

Weiterhin ist es gemäß der Erfindung möglich, die Kanäle durch in der Grundplatte ausgebildete Ausformungen und diese Ausformungen zu einem rohrartigen Hohlraum verschließende Abdeckungen zu bilden, wobei die Kanäle auch in diesem Fall mit einem von der Kreisform abweichenden Querschnitt ausgeführt sind. Bei dieser erfindungsgemäßen Ausbildung ergibt sich eine weitere Gewichtsreduzierung für die erfindungsgemäße Deckenstrahlplatte, da die Kanäle zumindest zu einem Teil unmittelbar von dem Material der Grundplatte gebildet werden.

Bei einer bevorzugten Ausführungsform sind die Abdeckungen mit angeformten Rändern versehen, an denen die Abdeckungen mit der Grundplatte flüssigkeitsdicht verbunden, vorzugsweise verschweißt oder verlötet sind.

Um die insbesondere bei größeren Längen und Breiten der Deckenstrahlplatte notwendige Aussteifung zu erzielen, können in der Grundplatte in an sich bekannter Weise Sicken ausgebildet sein.

Auf der Zeichnung sind verschiedene Ausführungsbeispiele der erfindungsgemäßen Deckenstrahlplatte jeweils anhand eines Querschnittes durch die Deckenstrahlplatte dargestellt, und zwar zeigen:

Figur 1 und 2 zwei Ausführungsbeispiele mit ebener Grundplatte und an deren Unterseite angeordneten Rohren mit rechteckigem bzw. trapezförmigem Querschnitt;

Figur 3 bis 7 fünf Ausführungsbeispiele, bei denen die Kanäle unter Verwendung von in Ausformungen der Grundplatte eingelegte Rohre gebildet werden, und

Figur 8 bis 12 fünf weitere Ausführungsbeispiele, bei denen die Kanäle durch Ausformungen der Grundplatte und diese Ausformungen zu rohrartigen Hohlräumen verschließende Abdeckungen gebildet sind.

Bei sämtlichen Ausführungsbeispielen besteht die Deckenstrahlplatte aus einer im wesentlichen ebenen Grundplatte 1 sowie aus Kanälen 2, in denen das wärmeabgebende Fluid strömt, weshalb diese Kanäle 2 mit auf der Zeichnung nicht dargestellten Zu- und Abführleitungen verbunden werden. Um die Stabilität der Grundplatte 1 zu erhöhen, ist diese an ihren Längsseiten mit einem U-förmig abgebogenen Rand 3 und ggf. mit unterschiedlich ausgebildeten Versteifungssicken 4 versehen.

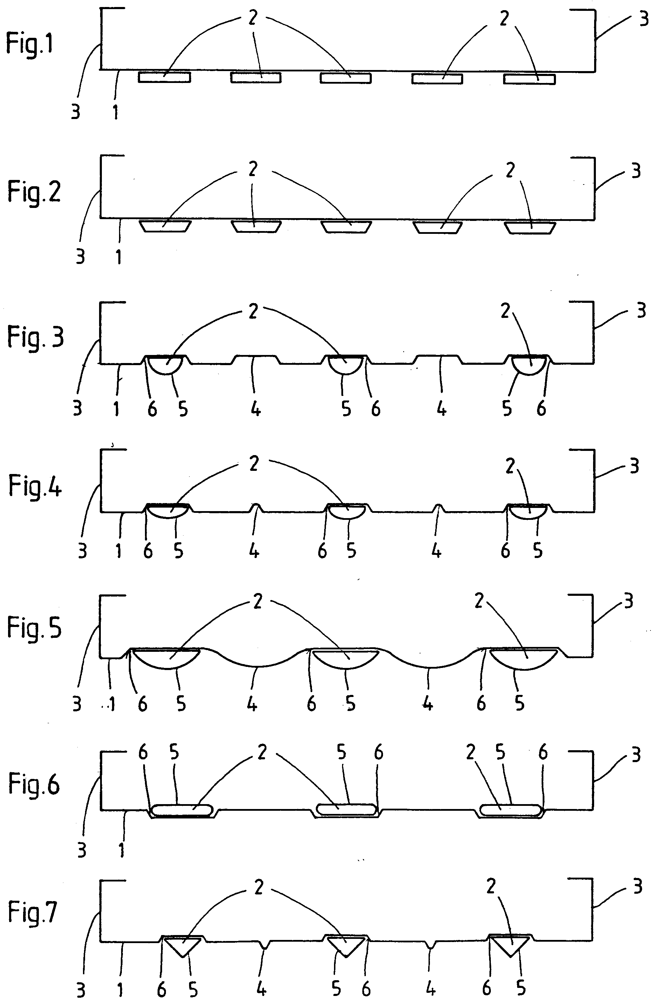

Bei den beiden ersten Ausführungsbeispielen nach den Figuren 1 und 2 ist die Grundplatte 1 als ebene Platte ausgeführt; an ihrer Unterseite sind Rohre 5 mit einem von der Kreisform abweichenden Querschnitt angeordnet. Beim Ausführungsbeispiel nach Figur 1 ist dieser Rohrquerschnitt rechteckig, beim Ausführungsbeispiel nach Figur 2 trapezförmig.

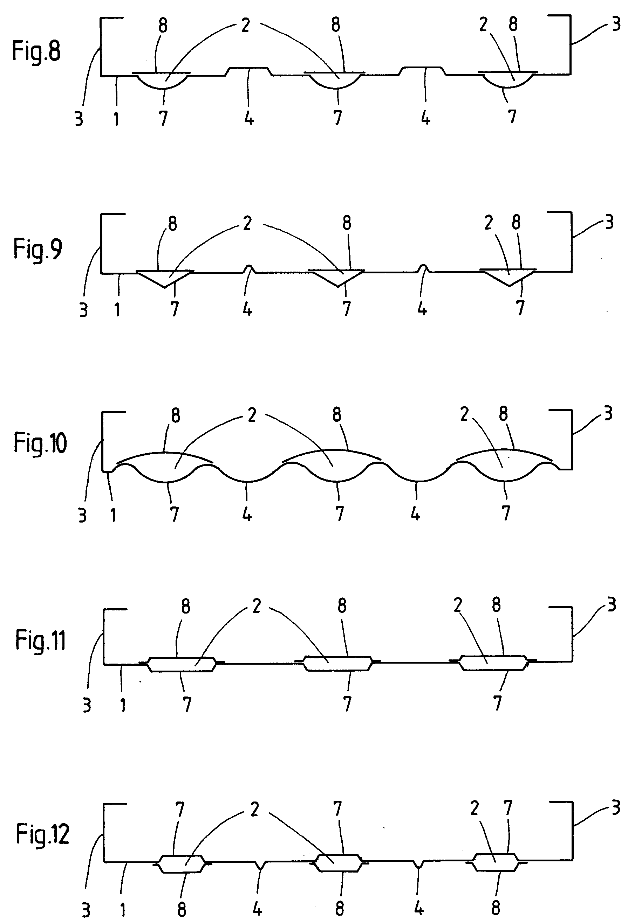

Bei den weiteren fünf Ausführungsbeispielen gemäß den Figuren 3 bis 7 werden die Kanäle 2 durch Rohre 5 gebildet, die jeweils innerhalb einer Ausformung 6 angeordnet sind, welche parallel zu den Rändern 3 der Grundplatte 1 verläuft. Die Rohre 5 besitzen einen von der Kreisform abweichenden Querschnitt und liegen großflächig in der jeweiligen Ausformung 6 an der Grundplatte 1 an. Während die Rohre 5 nach Fig. 3 einen etwa halbkreisförmigen Querschnitt und nach Figur 4 einen Querschnitt entsprechend einer halben Ellipse haben, ist der Querschnitt der Rohre 5 nach Figur 5 als Kreisabschnitt, nach Figur 6 als langgestrecktes Oval und nach Figur 7 als Dreieck ausgeführt.

Die fünf weiteren Ausführungsbeispiele nach den Figuren 8 bis 12 zeigen wiederum Kanäle 2 mit von der Kreisform abweichendem Querschnitt. Bei diesen fünf Ausführungen werden die Kanäle jedoch nicht durch Rohre, sondern durch in der Grundplatte 1 ausgebildete Ausformungen 7 und Abdeckungen 8 gebildet, welche die Ausformungen 7 zu einem rohrartigen Hohlraum verschließen. Diese Abdeckungen 8 sind mit angeformten Rändern versehen, an denen die Abdeckungen 8 mit der Grundplatte 1 flüssigkeitsdicht verbunden, vorzugsweise verschweißt oder verlötet sind.

Bei allen Ausführungsbeispielen ergeben sich Kanäle 2 mit einer gegenüber einem kreisförmigen Querschnitt desselben Strömungsquerschnitts vergrößerten Oberfläche. Hierdurch entsteht eine größere Kontaktfläche zwischen dem die Kanäle 2 bildenden Material und der Grundplatte 1, so daß die durch Wärmeleitung von dem wärmeabgebenden Fluid auf die Grundplatte 1 übertragene Wärmemenge vergrößert wird. Hierdurch ergibt sich entweder eine größere Wärmeleistung der Deckenstrahlplatte oder die Möglichkeit, die Anzahl der Kanäle 2 und/oder die Menge des umlaufenden Fluids bei gleicher Wärmeleistung der Deckenstrahlplatte zu verringern.

### Bezugszeichenliste:

1 Grundplatte
2 Kanal
3 Rand
4 Versteifungssicke
5 Rohr
6 Ausformung
7 Ausformung
8 Abdeckung

### Patentansprüche

1. Deckenstrahlplatte zur Beheizung von Räumen mittels Strahlungswärme, bestehend aus einer im wesentlichen ebenen Grundplatte (1) und aus einer Mehrzahl von Kanälen (2), die parallel zu den Längsrändern (3) der Grundplatte (1) verlaufen und an Zu- und Abführleitungen für das wärmeabgebende Fluid anschließbar sind,
**dadurch gekennzeichnet,**
daß die Kanäle (2) mit einem von der Kreisform abweichenden Querschnitt ausgebildet sind.

2. Deckenstrahlplatte nach Anspruch 1, dadurch gekennzeichnet, daß die Kanäle (2) durch in Ausformungen (6) der Grundplatte (1) angeordnete Rohre (5) mit einem halbkreisförmigen, ovalen, elliptischen, rechteckigen, trapezförmigen, dreieckigen oder ähnlichem Querschnitt gebildet sind.

3. Deckenstrahlplatte nach Anspruch 1, dadurch gekennzeichnet, daß die Kanäle (2) durch in der Grundplatte (1) ausgebildete Ausformungen (7) und diese Ausformungen (7) zu einem rohrartigen Hohlraum verschließende Abdeckungen (8) gebildet sind.

4. Deckenstrahlplatte nach Anspruch 3, dadurch gekennzeichnet, daß die Abdeckungen (8) mit angeformten Rändern versehen sind, an denen die Abdeckungen (8) mit der Grundplatte (1) flüssigkeitsdicht verbunden, vorzugsweise verschweißt oder verlötet sind.

5. Deckenstrahlplatte nach einem der Ansprüche 1 bis 4, dadurch gekennzeichnet, daß in der Grundplatte (1) Versteifungssicken (4) ausgebildet sind.

Fig.1

Fig.2

Fig. 3

Fig.4

Fig.5

Fig.6

Fig.7

4

Fig.8

Fig.9

Fig.10

Fig.11

Fig.12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-1 499 359 (TUBES DE LA PROVIDENCE)<br>* Figuren *<br>--- | 1 | F 24 D 3/16 |
| X | FR-A-1 200 908 (SOC. METALLURGIQUE DE L'AISNE)<br>* Insgesamt *<br>--- | 1 | |
| X | FR-A-2 308 074 (WESSELTOFT)<br>* Anspruch 1; Figuren *<br>--- | 1,2 | |
| X | FR-A-1 522 767 (TRANTER MANUFACTURING INC)<br>* Résumé; Abbildungen *<br>--- | 1,3 | |
| X | DE-A-2 749 397 (SCHÖLL)<br>* Figuren 1,2 *<br>----- | 1,3,4 | |

RECHERCHIERTE SACHGEBIETE (Int. Cl.5)

F 24 D
F 28 D

Der vorliegende Recherchenbericht wurde für alle Patentansprüche erstellt

| Recherchenort | Abschlußdatum der Recherche | Prüfer |
|---|---|---|
| DEN HAAG | 02-03-1992 | VAN GESTEL H.M. |

Europäisches
Patentamt

EP 91 10 2869

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

siehe Blatt  -B-

☒ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche:

**MANGELNDE EINHEITLICHKEIT DER ERFINDUNG**

Nach Auffassung der Recherchenabteilung entspricht die vorliegende europäische Patentanmeldung nicht den Anforderungen an die Eintheitlichkeit der Erfindung; sie enthält mehrere Erfindungen oder Gruppen von Erfindungen, nämlich:

1. Patentansprüche 1,2,5:

Deckenstrahlplatte mit Rohre angeordnet in Ausformungen der Grundplatte

2. Patentansprüche 1,3,4:

Deckenstrahlplatte mit Kanäle integriert in der Grundplatte